# FASCICULE DE BREVET EUROPEEN

(11) **EP 1 910 017 B1**
(45) Date de publication et mention de la délivrance du brevet: **21.09.2011**
(21) Numéro de dépôt: 06764655.4
(22) Date de dépôt: 22.05.2006
(51) Int. Cl.: B23K 37/053, B23K 9/028, B23K 9/16, B23K 9/32

(54) **DISPOSITIF POUR LE CENTRAGE ET LE SERRAGE DE PIECES TUBULAIRES AVEC DES MOYENS DE MESURE EN TEMPS REEL ET DE REGULATION DE LA TENEUR EN HUMIDITE**
VORRICHTUNG ZUM ZENTRIEREN UND FESTKLEMMEN VON RÖHRENFÖRMIGEN TEILEN MIT MITTELN ZUR ECHTZEITMESSUNG UND REGULIERUNG DES FEUCHTIGKEITSGEHALTS
DEVICE FOR CENTRING AND CLAMPING TUBULAR PARTS, COMPRISING MEANS FOR THE REAL-TIME MEASUREMENT AND REGULATION OF THE MOISTURE CONTENT

(30) Priorité: 20.05.2005 FR 0505078
(43) Date de publication de la demande: 16.04.2008
(73) Titulaire: Serimax, 77290 Mitry-Mory (FR)
(72) Inventeur: RICHARD, Gilles, F-60330 Silly le Long (FR); L'ARVOR, Eric, F-02600 Villers-Cotterets (FR)
(74) Mandataire: Fosse, Danièle
(86) Numéro de dépôt international: PCT/FR2006/001159
(87) Numéro de publication internationale: WO 2006/123070

(56) Documents cités:
- GB-A- 2 355 425
- US-A- 4 541 055
- US-A- 5 425 492

## Description

La présente invention concerne un dispositif de centrage et de serrage de conduits en acier allié, mis en place bout à bout pour être soudés pour former des canalisations du type pipeline conformément au préambule de la revendication 1 (voir, par exemple, US 5 425 492), devant résister à la corrosion pour le transport de gaz, de pétrole ou d'eau.

Lors de la construction d'une canalisation de type pipeline, on met en place le bout d'un conduit à l'extrémité de la canalisation en construction pour les souder ensemble. Il est donc possible de réaliser une canalisation de la longueur souhaitée par simple ajout de conduits. Le dispositif de soudage extérieur est généralement agencé pour se déplacer le long de la canalisation ainsi construite et réaliser les soudures au fur et à mesure des besoins tandis qu'un dispositif interne à la canalisation est déplaçable également à l'intérieur de celle-ci.

Ce dispositif interne permet lors de la mise en place d'un nouveau conduit à souder de faire parfaitement coïncider l'axe de ce conduit avec celui de la canalisation en construction et donc d'aligner avec précision les extrémités respectives du conduit et de la canalisation en vue du soudage et de les maintenir dans cet alignement le temps de l'opération de soudage. Un dispositif de centrage et de serrage de ce type est communément appelé "clamp " et est notamment décrit dans EP 0 249 079, EP 1 123 774 ou encore EP 0 767 719.

Le dispositif de soudage qui se trouve positionné à l'extérieur des conduits en acier inoxydable ou en acier allié, dépose donc la ou les passes de soudage par l'extérieur. Lors de la première passe, appelée passe de pénétration, il est important que le bain de fusion ne rentre pas en contact avec un gaz actif, c'est-à-dire non inerte, tel que l'air ou l'oxygène, de manière à éviter qu'une oxydation ne survienne lorsqu'ils sont chauffés aux températures de soudage. En effet, si le soudage est effectué dans une atmosphère renfermant de l'oxygène, la canalisation réalisée est alors beaucoup plus rapidement sensible à la corrosion. Aussi, de manière à protéger le bain de fusion, le dispositif de soudage extérieur comporte des moyens permettant de générer une protection gazeuse en amenant, au droit de la soudure, du gaz inerte pour protéger ledit bain de fusion.

Toutefois, on a pu remarquer que cette protection extérieure reste insuffisante. En effet, lors de la passe de pénétration, le bain de fusion sur l'envers de la soudure entre en contact avec une atmosphère non exempte d'oxygène. On a donc proposé dans EP 0 193 812, un dispositif de centrage et de serrage interne pourvu de moyens créant une chambre étanche au niveau du joint entre les deux conduits et purgeant l'oxygène renfermé dans cette chambre en y introduisant un gaz inerte tel que de l'argon pour créer une atmosphère inerte au niveau de la soudure. De manière à maintenir cette atmosphère de protection tout au long de l'opération de soudage, le flux d'argon est maintenu de manière continue dans la chambre étanche. Un tel dispositif permet donc de générer une atmosphère exempte d'oxygène au niveau de l'envers de la soudure.

Cependant, un dispositif de ce type présente au moins deux inconvénients majeurs en ce que :
- il nécessite une consommation très élevée de gaz inerte, le flux de gaz inerte étant continu pendant toute l'opération de soudage pour garantir cette atmosphère de protection. Cette consommation présente non seulement un coût élevé mais nécessite également des réserves en gaz inerte importantes, de manière à éviter des problèmes d'approvisionnement en gaz et pouvant générer un encombrement du dispositif,
- une teneur trop élevée en humidité peut engendrer des imperfections lors de la réalisation de la première passe de la séquence de soudage, ces imperfections pouvant être du type porosités, aspect rôché/oxydé ou concavité. Suivant la nature et les dimensions de ces imperfections, elles peuvent conduire à des réparations fort coûteuses.

Dans le document US 5 425 492, on propose un dispositif de purge avec lequel on introduit un gaz de purge au niveau d'un soudage à réaliser pour évacuer notamment les gaz réactifs dans un espace intérieur défini au niveau du soudage. De manière à maintenir un flux de gaz de purge efficace, on mesure la pression dans l'espace interne et les valeurs mesurées sont amenées vers un contrôleur qui ajuste de manière incrémentielle la décharge du gaz dans l'espace intérieur. Cependant, l'espace intérieur au niveau du plan de joint est très vaste et l'émission du gaz de purge n'intervient pas au droit du plan de joint mais aux extrémités de cet espace intérieur de sorte que le flux de gaz de purge soit laminaire et s'étendent le long des parois de l'espace interne jusqu'au soudage. Par conséquent, la consommation en gaz de purge reste malgré la régulation proposée très importante pour pouvoir maintenir une atmosphère de protection efficace. Par ailleurs, la mesure de la pression étant effectuée aux extrémités de l'espace ainsi défini et à proximité des moyens d'émission du gaz de purge, on peut également supposer qu'elle ne reflète pas la pression du niveau du plan de joint ce qui ne peut conduire à une régulation efficace en temps réel. De même, il n'est nullement question de mesurer la teneur en humidité.

Dans le document US 4 541 055, on connaît un dispositif d'usinage au laser de pièces et notamment un appareil de commande informatique dudit usinage, dans lequel une chambre d'usinage reçoit la pièce à usiner ainsi qu'un gaz non réactif dont le débit d'entrée est contrôlé. On effectue un contrôle de la teneur en oxygène et de la teneur en humidité à partir de la mesure de la teneur en oxygène et en eau dans la chambre mais ces mesures ne visent pas à générer une régulation du débit ou de la pression du gaz de purge, juste à définir un état permettant le soudage ou non, le débit du gaz étant fixé pour chacune des phases de soudage. En conséquence, lorsque la teneur en humidité est détectée supérieure à un niveau spécifié, on empêche le soudage au laser. De plus, les conditions de ce procédé de soudage au laser sont très éloignées du soudage bout à bout de conduits pour réaliser des pipelines.

Afin de pallier ces inconvénients, la présente invention propose un dispositif de centrage et de serrage permettant de générer une atmosphère de protection de la soudure à l'intérieur des conduits à souder mais qui permet également de contrôler et réguler ladite atmosphère de protection pour garantir des conditions optimales.

Ainsi, la présente invention a pour objet un dispositif de centrage et de serrage de conduits, de préférence en acier allié, mis bout à bout pour être soudés et pour former une canalisation du type pipeline tel que défini dans la revendication 1.

Ainsi, de manière avantageuse, le dispositif permet de définir et maintenir des conditions de soudage optimales (atmosphère de protection exempte d'humidité).

Cette protection gazeuse envers permet d'obtenir une qualité de passe de pénétration optimale et ce, quel que soit le procédé de soudage utilisé tel que à l'arc à électrode fusible MIG/MAG, à l'arc à électrode réfractaire, etc., en régulant le débit de gaz inerte et/ou la pression d'alimentation en gaz inerte de manière à maintenir la teneur en humidité de ladite atmosphère de protection au-dessous de la valeur de seuil prédéterminée de manière à garantir de bonnes conditions pour le soudage sans pour autant nécessiter la distribution de manière continue du gaz inerte. Le dispositif est donc avantageusement économique tout en contribuant à améliorer la compacité de la passe de

Les données mesurées pour la teneur en humidité sont enregistrées et traitées en temps réel de manière à réguler en temps réel la pression d'alimentation et/ou le débit du gaz inerte, ces données peuvent également être transférées vers une unité de commande et de contrôle à l'extérieur de la canalisation en formation par des moyens de transmission du type filaires, infra-rouge, radio ou tout autre moyen(s) approprié(s).

Selon l'invention, ce dispositif comporte des moyens de traitement en temps réel des mesures de la teneur en humidité et en tant que moyens de régulation en temps réel de la teneur en humidité, des moyens de déshumidification de l'atmosphère de protection, tels que par exemple des moyens d'introduction de sels dans ladite atmosphère, des moyens de chauffage associés à des moyens d'évacuation de l'humidité.

Le dispositif comporte alors de manière avantageuse des moyens de commande desdits moyens de déshumidification, actionnables en temps réel en fonction de la teneur en humidité mesurée dans la chambre d'inertage.

L'envoi des instructions vers les moyens de régulation peut être réalisé par liaison électrique filaire, par radio transmission, par infrarouge ou tout autre moyen de transmission approprié.

Selon une forme de réalisation particulièrement avantageuse de l'invention, les moyens de régulation du débit de gaz inerte et/ou de la pression d'alimentation de ce gaz inerte fonctionnent également en fonction de la teneur en O₂ mesurée dans ladite atmosphère de protection de manière à maintenir la teneur en O₂ de ladite atmosphère inférieure à une valeur de seuil d'alarme prédéterminée.

A cet effet, le dispositif comporte également des moyens de mesure en temps réel de la teneur en O₂ au sein de l'atmosphère de protection, par exemple confinée à l'intérieur de la chambre d'inertage, et des moyens de traitement, de préférence en temps réel, des mesures de la teneur en O₂, le traitement desdites informations (mesures) permettant de déterminer des instructions de commande des moyens de régulation du débit et/ou de la pression d'alimentation du gaz inerte pour maintenir la teneur en O₂ au-dessous du seuil d'alarme prédéterminé si nécessaire. De préférence, la valeur de seuil d'alarme de la teneur en O₂ est 5000 ppm.

De même, on peut prévoir également des moyens de mesure en temps réel de la pression tel qu'un capteur de pression permettant de mesurer la pression à l'intérieur de l'atmosphère de protection et des moyens de traitement en temps réel des mesures de la pression, le traitement desdites informations (mesures) permettant de déterminer les instructions de commande des moyens de régulation du débit et/ou de la pression d'alimentation du gaz inerte pour maintenir la pression au-dessous du seuil d'alarme prédéterminé. La valeur de seuil d'alarme de la pression est de préférence 12 millibars.

A la valeur de seuil d'alarme prédéterminée au-dessous de laquelle doit être la teneur en humidité, de préférence 60%, on peut ajouter une valeur de seuil de début de cycle, inférieure à la valeur de seuil d'alarme de sorte que le cycle de soudage ne commence que pour une teneur en humidité inférieure à cette valeur de seuil de début de cycle. De même, on peut prévoir une valeur de seuil de sécurité, supérieure à la valeur de seuil d'alarme qui, si elle est atteinte, entraîne la commande de moyens d'arrêt automatique du soudage en vue de l'arrêt total du cycle de soudage. Il en est de même pour la teneur en O₂ et la pression.

Ainsi de préférence, lorsque les moyens de mesure de la teneur en humidité ainsi qu'éventuellement ceux de la teneur en O₂ et/ou de la pression détectent des valeurs de teneur en humidité, de teneur en O₂, de pression inférieures aux valeurs de seuil d'alarme prédéterminées et de préférence inférieures aux valeurs de seuil de début de cycle, des moyens de commande du soudage à l'extérieur sont activés et le cycle de soudage est déclenché. Ce cycle de soudage se déroule ensuite tant que les valeurs de teneur en humidité et optionnellement de teneur en O₂ et de pression mesurées restent inférieures aux valeurs de seuil d'alarme.

Si lors du soudage, les moyens de régulation du débit et/ou de la pression d'alimentation du gaz inerte ne permettent pas de maintenir des valeurs de teneur en humidité ainsi qu'éventuellement de teneur en O₂ et de pression inférieures aux valeurs de seuil d'alarme et si la durée de dépassement du seuil d'alarme est inférieure à un temps prédéterminé, on peut prévoir des moyens d'émission d'un message d'anomalies vers l'unité de commande et de contrôle de la station de soudage extérieur.

Si la durée de dépassement du seuil d'alarme dépasse le temps prédéterminé, alors des moyens d'arrêt automatique du soudage sont activés et le cycle de soudage peut être arrêté automatiquement.

L'envoi des instructions vers les moyens de régulation peut être réalisé par liaison électrique filaire, par radio transmission, par infrarouge ou tout autre moyen de transmission approprié.

De préférence les moyens de traitement comportent au moins des moyens d'enregistrement de la valeur de seuil d'alarme, de la valeur de seuil de début de cycle et de la valeur de seuil de sécurité ainsi que des moyens de comparaisons des mesures effectuées avec lesdites valeurs enregistrées. Les valeurs de seuil peuvent donc être choisies par l'utilisateur et programmées en fonction du milieu et des conditions d'opération.

Les moyens de cloisonnement étanche définissant la chambre d'inertage sont de préférence constitués de joints tels que des joints gonflables, des joints à lèvres ou autre, ou bien de bouées gonflables. Cette chambre d'inertage permet avantageusement de réduire le volume de gaz inerte à diffuser pour obtenir la protection gazeuse recherchée d'une part et de réduire la durée pour atteindre cette teneur et/ou pression prédéfinie, encore appelée durée d'inertage d'autre part.

Des moyens de mesure de la température peuvent être prévus dans la chambre d'inertage, notamment pour mesurer la température ambiante dans laquelle le capteur de teneur en humidité travaille et pour vérifier que cette température est compatible avec la plage d'utilisation dudit capteur.

Selon une forme préférée du dispositif selon l'invention, les moyens de distribution du gaz inerte sont agencés sur le dispositif de sorte que cette distribution intervienne directement à l'envers du plan de joint, à une distance radiale par rapport à la peau intérieure des extrémités à souder d'au maximum 30 mm, les moyens de distribution étant du type tuyau/serpentin pourvu d'une pluralité de perçages ou d'orifices d'évacuation ou du type plaque métallique poreuse (acier poral) permettant de diffuser le gaz inerte de façon homogène en direction du plan de joint.

Selon une variante du dispositif selon l'invention, ce dernier est équipé de moyens de vérification du calibrage des moyens de mesure de la teneur en humidité, comprenant une alimentation en gaz inerte additionnelle, le gaz inerte de cette seconde alimentation étant calibré en humidité par exemple à 40% et de préférence renfermé dans une bouteille extérieure au dispositif et amené à celui-ci par une conduite reliée directement aux moyens de mesure de la teneur en humidité, et des moyens permettant de basculer d'une alimentation à l'autre de sorte que, lorsque le gaz inerte calibré en humidité passe pendant un temps très court au niveau des moyens de mesure, on peut vérifier le calibrage des moyens de mesure.

Un dispositif selon l'invention est utilisable dans n'importe quelle position des conduits à souder, conduits à l'horizontale pour le soudage à terre ou en mer avec une pose en faible profondeur d'eau ou à la verticale lors du soudage en mer à grande profondeur d'eau.

Le dispositif selon l'invention peut également comporter une latte support envers maintenant le bain de fusion lors de la réalisation de la phase de pénétration, cette latte pouvant être réalisée en matériaux du type céramique, métallique tel que le cuivre ou un alliage de cuivre.

L'invention a également trait à un procédé de mise en oeuvre du dispositif selon l'une des revendications 1 à 10, voir revendication 11.

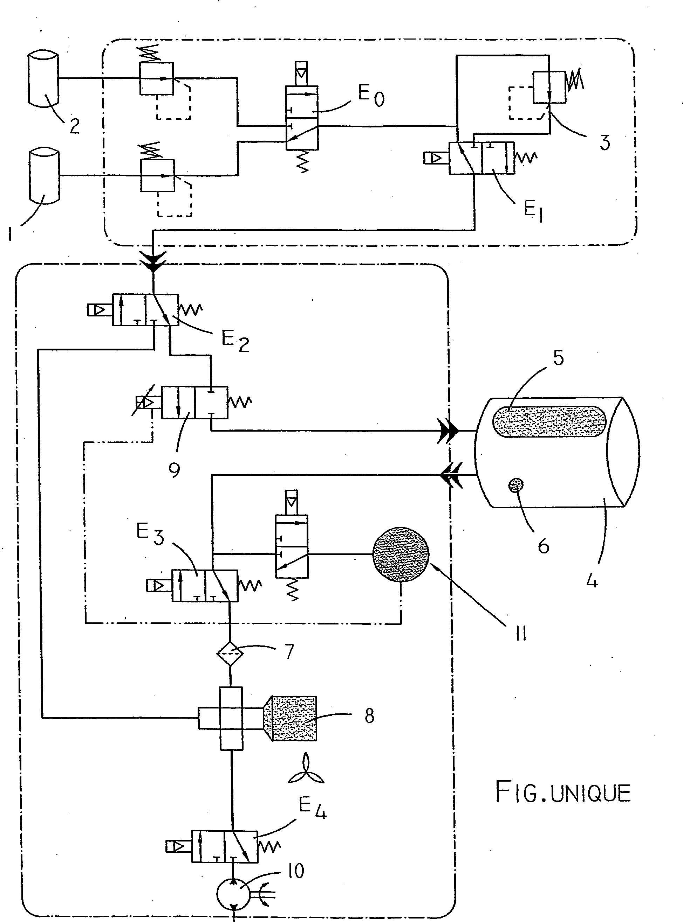

On décrira maintenant l'invention plus détail en référence au dessin dans lequel la figure unique représente de manière schématique un dispositif selon l'invention.

Comme on peut le voir schématiquement à la figure unique, le dispositif comporte des moyens de distribution d'un gaz inerte comprenant une réserve 1 de gaz inerte ainsi qu'une réserve de gaz étalon 2. Une première électrovanne E0 permet de sélectionner l'une ou l'autre des réserves. Dans la figure unique, on a choisi la distribution de gaz inerte pour créer une atmosphère de protection au niveau du plan de joint.

On prévoit ensuite des moyens 3 de régulation de la pression. Sur le schéma représenté une deuxième électrovanne E1 guide le gaz inerte directement vers une troisième électrovanne E2 qui amène le gaz vers la chambre d'inertage 4 créée au niveau du plan de joint. Un capteur de température 5 est prévu dans cette chambre 4 ainsi qu'un capteur d'humidité 6.

Par l'intermédiaire d'une électrovanne E3, le gaz est guidé vers une cellule 8 de mesure de la teneur en O₂. Un filtre 7 peut être positionné avant la cellule 8. Lorsque la cellule 8 détecte une teneur en O₂ supérieure au seuil de d'alarme prédéterminé, on commande en retour le régulateur de pression 9.

La cellule 8 est également liée à une pompe auxiliaire 10 par l'intermédiaire d'une électrovanne E4.

Cette pompe auxiliaire 10 permet de vérifier que le gaz analysé par la cellule 8 est bien représentatif du gaz contenu dans la chambre 4, la pompe 10 permettant de créer une dépression contrôlée en aval de la cellule 8 pour garantir un débit minimum.

Un capteur de pression 11 peut également être prévu.

L'invention n'est bien entendu pas limitée au mode de réalisation donné décrit ci-dessus, mais en couvre au contraire toutes les variantes, en particulier quant au choix des valeurs de seuil d'alarme qui sont déterminées en fonction des conditions de soudage et de l'environnement dans lequel survient le soudage.

## Revendications

1. Dispositif de centrage et de serrage de conduits, de préférence en acier allié, mis bout à bout pour être soudés et pour former une canalisation du type pipeline, présentant notamment des moyens de centrage et de serrage de deux conduits à souder, éventuellement des moyens de cloisonnement étanche définissant une chambre d'inertage au niveau du plan de joint, et des moyens de distribution d'un gaz inerte pour créer une atmosphère de protection au niveau du plan de joint, **caractérisé en ce qu'**il comprend en outre au moins des moyens de mesure en temps réel de la teneur en humidité de l'atmosphère de protection et des moyens de régulation en temps réel de ladite teneur en humidité en fonction desdites mesures, de manière à maintenir la teneur en humidité de ladite atmosphère inférieure à une valeur de seuil prédéterminée,
et **en ce qu'**il comporte des moyens de traitement en temps réel des mesures de la teneur en humidité et **en ce que** les moyens de régulation en temps réel consistent en des moyens de déshumidification de l'atmosphère de protection, tels que des moyens d'introduction de sels dans ladite atmosphère, des moyens de chauffage associés à des moyens d'évacuation de l'humidité et tout autre moyen approprié.

2. Dispositif selon la revendication 1,
**caractérisé en ce qu'**il comporte des moyens de commande en temps réel desdits moyens de déshumidification, actionnables en fonction de la teneur en humidité mesurée dans l'atmosphère de protection.

3. Dispositif selon l'une des revendications 1 ou 2,
**caractérisé en ce que** la valeur du seuil d'alarme de la teneur en humidité est de 60%, de préférence 50%.

4. Dispositif selon l'une des revendications 1 à 3,
**caractérisé en ce qu'**il comporte des moyens de commande du soudage activés lorsque la teneur en humidité est inférieure à une valeur de seuil de début de cycle prédéterminée, inférieure à la valeur de seuil d'alarme.

5. Dispositif selon l'une des revendications 1 à 3,
**caractérisé en ce qu'**il comporte des moyens d'émission d'un message d'anomalies vers l'unité de commande et de contrôle de la station de soudage extérieur lorsque la teneur en humidité est supérieure à la valeur de seuil d'alarme et si la durée de dépassement du seuil est inférieure à un temps prédéterminé.

6. Dispositif selon la revendication 5,
**caractérisé en ce qu'**il comporte des moyens d'arrêt automatique du soudage, si la durée du dépassement du seuil d'alarme dépasse le temps prédéterminé.

7. Dispositif selon l'une des revendications 1 à 6,
**caractérisé en ce qu'**il comporte en outre des moyens de mesure en temps réel de la teneur en 02 au sein de l'atmosphère de protection et des moyens de traitement en temps réel des mesures de la teneur en 02, le traitement desdites informations (mesures) permettant de déterminer les instructions de commande de moyens de régulation du débit et/ou de la pression d'alimentation du gaz inerte pour maintenir la teneur en 02 au-dessous d'un seuil d'alarme prédéterminé, de préférence 5000 ppm.

8. Dispositif selon l'une des revendications 1 à 7,
**caractérisé en ce qu'**il comporte en outre des moyens de mesure en temps réel de la pression tel qu'un capteur de pression permettant de mesurer la pression à l'intérieur de l'atmosphère de protection et des moyens de traitement en temps réel des mesures de la pression, le traitement desdites informations (mesures) permettant de déterminer les instructions de commande de moyens de régulation du débit et/ou de la pression d'alimentation du gaz inerte pour maintenir la pression au-dessous du seuil d'alarme prédéterminé, de préférence 12 millibars.

9. Dispositif selon l'une des revendications 1 à 8,
**caractérisé en ce que** des moyens de mesure de la température sont prévus dans la chambre d'inertage.

10. Dispositif selon l'une des revendications 1 à 9,
**caractérisé en ce que** les moyens de distribution du gaz inerte sont agencés sur le dispositif de sorte que cette distribution intervienne directement à l'envers du plan de joint, à une distance radiale par rapport à la peau intérieure des extrémités à souder d'au maximum 30 mm, les moyens de distribution étant du type tuyau/serpentin pourvu d'une pluralité de perçages ou d'orifices d'évacuation permettant de diffuser le gaz inerte de façon homogène en direction du plan de joint.

11. Procédé de mise en oeuvre du dispositif selon l'une des revendications 1 à 10, dans lequel une fois que ledit dispositif introduit à l'intérieur de deux conduits à souder, a centré et serré lesdites conduits, on distribue un gaz inerte au niveau du plan de joint entre ceux-ci de manière à créer une atmosphère de protection au niveau de l'envers du plan de joint, **caractérisé en ce qu'**on mesure en temps réel la teneur en humidité régnant au sein de l'atmosphère de protection, on compare lesdites mesures effectuées par rapport à une valeur de seuil d'alarme de teneur en humidité prédéterminée, et on régule ensuite en temps réel la teneur en humidité de manière à la maintenir au-dessous du seuil d'alarme prédéterminé.

## Claims

1. Device for centring and clamping conduits which are preferably made from alloy steel and which are positioned end to end in order to be welded to form a pipeline, having in particular means for centring and clamping two conduits that are to be welded, optional leak-tight partition means which define an inerting chamber at the mating surface, and inert gas distribution means for creating a protective atmosphere at the mating surface, **characterised in that** it further comprises at least means for measuring in real time the humidity content of the protective atmosphere and means for regulating in real time said humidity content according to said measurements, in such a way as to maintain the humidity content of said atmosphere below a pre-determined threshold value,
and **in that** it comprises means for treating in real time measurements of the humidity content and **in that** the means for regulating in real time consist of means for dehumidifying the protective atmosphere, such as means for introducing salts into said atmosphere, means for heating associated with means for removing humidity and any other appropriate means.

2. Device according to claim 1, **characterised in that** it comprises means for controlling in real time said means for dehumidifying, which can be actuated according to the humidity content measured in the protective atmosphere.

3. Device according to one of claims 1 or 2, **characterised in that** the value of the alarm threshold of the humidity content is 60%, more preferably 50%.

4. Device according to one of claims 1 to 3, **characterised in that** it comprises means for controlling wielding activated when the humidity content is below a predetermined cycle start threshold value, below the predetermined alarm value.

5. Device according to one of claims 1 to 3, **characterised in that** it comprises means for emitting a message of anomalies to the control unit and for controlling the exterior wielding station when the humidity content is above the alarm threshold value and if the duration of the exceeding of the threshold is less than a predetermined time.

6. Device according to claim 5, **characterised in that** it comprises means for automatically stopping welding, if the duration of the exceeding of the alarm threshold exceeds the predetermined time.

7. Device according to one of claims 1 to 6, **characterised in that** it further comprises means for measuring in real time the O₂ content in the protective atmosphere and means for treating in real time measurements of the O₂ content, the treatment of said information (measurements) making it possible to determine the instructions for controlling the means for regulating the flow and/or the supply pressure of the inert gas in order to maintain the O₂ content below a predetermined alarm threshold, more preferably 5,000 ppm.

8. Device according to one of claims 1 to 7, **characterised in that** it further comprises means for measuring pressure in real time such as a pressure sensor making it possible to measure the pressure inside the protective atmosphere and means for treating pressure measurements in real time, the treatment of said information (measurements) making it possible to determine the instructions for controlling the means for regulating the flow and/or the supply pressure of the inert gas in order to maintain the pressure below the predetermined alarm threshold, more preferably 12 millibars.

9. Device according to one of claims 1 to 8, **characterised in that** means for measuring the temperature are provided inside the inerting chamber.

10. Device according to one of claims 1 to 9, **characterised in that** the means for distributing the inert gas are arranged on the device in such a way that this distribution occurs directly on the other side of the mating surface, at a radial distance in relation to the interior skin of the ends to be welded by a maximum of 30 mm, the means of distributing being of the pipe/coil type provided with a plurality of piercings or holes for homogeneously distributing the inert gas in the direction of the mating surface.

11. Method for implementing the device according to one of claims 1 to 10, wherein once the said device introduced into the two conduits to be welded, has centred and clamped said conduits, an inert gas is distributed on the mating surface between the latter in such a way as to create a protective atmosphere on the other side of the mating surface, **characterised in that** the humidity content present in the protective atmosphere is measured in real time, said measurements carried out are compared in relation to a predetermined humidity content alarm threshold value, and then in real time the humidity content is regulated in such a way as to maintain it below the predetermined alarm threshold.

## Patentansprüche

1. Zentrier- und Klemmvorrichtung von Leitungen, vorzugsweise aus legiertem Stahl, Ende an Ende gelegt, um geschweißt zu werden und um eine Rohrleitung des Typs Pipeline zu bilden, aufweisend insbesondere Mittel zur Zentrierung und Klemmung von zwei zu schweißenden Leitungen, eventuell Mittel zur dichten Abschirmung, definierend eine Inertkammer auf der Ebene der Verbindungsfläche und Mittel zur Verteilung eines Inertgases, um eine Schutzatmosphäre auf der Ebene der Verbindungsfläche zu bilden, **dadurch gekennzeichnet, dass** sie außerdem mindestens Mittel zur Messung in Echtzeit des Feuchtigkeitsgehalts der Schutzatmosphäre und Mittel zur Regulierung in Echtzeit des Feuchtigkeitsgehalts in Abhängigkeit von den Messungen umfasst, um den Feuchtigkeitsgehalt der Atmosphäre unter einem Vorbestimmen Schwellenwert zu halten,
und dadurch, dass sie Mittel zur Verarbeitung in Echtzeit der Messungen des Feuchtigkeitsgehalts umfasst, und dadurch, dass die Mittel zur Regulierung in Echtzeit Mittel zur Entfeuchtung der Schutzatmosphäre umfassen, wie z.B. Mittel zur Einführung von Salzen in die Atmosphäre, Mittel zur Erhitzung, verbunden mit Mitteln zur Evakuierung der Feuchtigkeit und alle anderen geeigneten Mittel.

2. Vorrichtung nach Anspruch 1,
**dadurch gekennzeichnet, dass** sie Mittel zur Steuerung in Echtzeit der Mittel zur Entfeuchtung umfasst, zu betätigen je nach dem Feuchtigkeitsgehalt, der in der Schutzatmosphäre gemessen wird.

3. Vorrichtung nach einem der Ansprüche 1 oder 2,
**dadurch gekennzeichnet, dass** die Alarmschwelle des Feuchtigkeitsgehalts bei 60%, vorzugsweise bei 50% liegt.

4. Vorrichtung nach einem der Ansprüche 1 bis 3,
**dadurch gekennzeichnet, dass** sie Mittel zur Steuerung der Schweißung umfasst, aktiviert wenn der Feuchtigkeitsgehalt unter einem Vorbestimmten Schwellenwert des Zyklusbeginns liegt, unter dem Alarmschwellenwert.

5. Vorrichtung nach einem der Ansprüche 1 bis 3,
**dadurch gekennzeichnet, dass** sie Mittel zur Ausgabe einer Meldung von Anomalien an die Steuer- und Kontrolleinheit der äußeren Schweißstation umfasst, wenn der Feuchtigkeitsgehalt über dem Alarmschwellenwert liegt, und wenn die Dauer des Überschreitens der Schwelle unter einer vorbestimmten Zeit liegt.

6. Vorrichtung nach Anspruch 5,
**dadurch gekennzeichnet, dass** sie Mittel zum automatischen Stopp der Schweißung umfasst, wenn die Dauer des Überschreitens der Alarmschwelle die Vorbestimmte Zeit übersteigt.

7. Vorrichtung nach einem der Ansprüche 1 bis 6,
**dadurch gekennzeichnet, dass** sie außerdem Mittel zur Messung in Echtzeit des O₂-Gehalts in der Schutzatmosphäre und Mittel zur Verarbeitung in Echtzeit der Messungen des O₂-Gehalts umfasst, wobei die Verarbeitung der Informationen (Messungen) ermöglicht, die Steueranweisungen der Mittel zur Regulierung des Durchsatzes und/oder des Versorgungsdrucks des inerten Gases zu bestimmen, um den O₂-Gehalt unter einer Vorbestimmten Alarmschwelle, vorzugsweise unter 5000 ppm, zu halten.

8. Vorrichtung nach einem der Ansprüche 1 bis 7,
**dadurch gekennzeichnet, dass** sie außerdem Mittel zur Messung in Echtzeit des Drucks wie z.B. einen Drucksensor umfasst, der ermöglicht, den Druck im Inneren der Schutzatmosphäre zu messen, und Mittel zur Verarbeitung in Echtzeit der Messungen des Drucks, wobei die Verarbeitung der Informationen (Messungen) ermöglicht, die Steueranweisungen der Mittel zur Regulierung des Durchsatzes und/oder des Versorgungsdrucks des inerten Gases zu bestimmen, um den Druck unter der vorbestimmten Alarmschwelle, vorzugsweise 12 Millibar, zu halten.

9. Vorrichtung nach einem der Ansprüche 1 bis 8,
**dadurch gekennzeichnet, dass** Mittel zur Messung der Temperatur in der Inertkammer vorgesehen sind.

10. Vorrichtung nach einem der Ansprüche 1 bis 9,
**dadurch gekennzeichnet, dass** die Mittel zur Verteilung des inerten Gases so auf der Vorrichtung angeordnet sind, dass diese Verteilung direkt auf der Rückseite der Verbindungsfläche, in einem radialen Abstand bezüglich der inneren Haut der zu schweißenden Enden von maximal 30 mm erfolgt, wobei die Mittel zur Verteilung des Typs Rohr/Rohrschlange sind, versehen mit einer Vielzahl von Evakuierungs-Bohrungen oder - Öffnungen, die es ermöglichen, das inerte Gas auf homogene Weise in Richtung der Verbindungsfläche zu verbreiten.

11. Verfahren zur Durchführung der Vorrichtung nach einem der Ansprüche 1 bis 10, wobei, nachdem die in das Innere der zwei zu schweißenden Rohre eingeführte Vorrichtung die Rohre zentriert und geklemmt hat, ein inertes Gas auf der Ebene der Verbindungsfläche wischen diesen verteilt wird, um eine Schutzatmosphäre auf der Ebene der Rückseite der Verbindungsebene zu bilden, **dadurch gekennzeichnet, dass** in Echtzeit der Feuchtigkeitsgehalt gemessen wird, der im Inneren der Schutzatmosphäre herrscht, die durchgeführten Messungen bezüglich eines vorbestimmten Alarmschwellenwerts des Feuchtigkeitsgehalts verglichen werden und dann in Echtzeit der Feuchtigkeitsgehalt so reguliert wird, dass er unter der vorbestimmten Alarmschwelle gehalten wird.
